(19) Europäisches Patentamt
European Patent Office
Office européen des brevets

(11) EP 1 260 955 A2

(12) **EUROPEAN PATENT APPLICATION**

(43) Date of publication:
**27.11.2002 Bulletin 2002/48**

(51) Int Cl.7: **G09F 3/10**, C09J 7/02

(21) Application number: **02010833.8**

(22) Date of filing: **15.05.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **21.05.2001 JP 2001150596**

(71) Applicant: **Sumitomo Chemical Company, Limited**
**Chuo-ku Osaka 541-8550 (JP)**

(72) Inventors:
- **Yamaguchi, Takanari**
**Tsukuba-shi, Ibaraki (JP)**
- **Kumada, Hiroaki**
**Inashiki-gun, Ibaraki (JP)**

(74) Representative: **Henkel, Feiler, Hänzel**
**Möhlstrasse 37**
**81675 München (DE)**

(54) **Indication label**

(57) Provided is an indication label having excellent heat resistance and hydroscopic resistance, comprising a supporting substrate having a printable surface and an adhesive layer on the other surface of the printable surface, wherein the supporting substrate is made of a liquid crystal polymer showing optical anisotropy in molten state. The label is suitably used under high temperature and high humidity.

EP 1 260 955 A2

## Description

BACKGROUND OF THE INVENTION

Field of the Invention

The present invention relates to an indication label, more specifically to an indication label comprising a supporting substrate made of a liquid crystal polymer.

Description of the Related Art

Recently, indication labels carrying on one surface a printable layer and on another surface an adhesive layer or sticky layer are desired to be endowed with heat resistance and hygroscopic resistance. For example, it is intensively desired to impart heat resistance and hygroscopic resistance to an indication label for monitoring the process of a flexible printed circuit passing through a solder reflow furnace at over 250°C, an indication label used under high temperature and high humidity environments applied in water vapor treatment, an indication label for monitoring retort products subjected to boiling water treatment, and an indication label for architecture used in the field.

On the other hand, as the supporting substrate of an indication label, use of a polyimide film, polyethylene terephthalate (PET) film, nylon film, and the like, is proposed. (JP-A No. 2-146079).

However, PET, nylon and the like have insufficient heat resistance, and polyimide has not only a problem of high cost but also problems of high water absorbing property and high water vapor permeability, leading in some cases to decrease in stickiness and adhesiveness due to permeated moisture. The conventional indication labels using supporting substrates do not satisfy heat resistance and hygroscopic resistance.

SUMMARY OF THE INVENTION

Therefore, an object of the present invention is to provide an indication label having excellent heat resistance and excellent hydroscopic resistance.

The present invention provides a practically excellent indication label comprising a supporting substrate having a printable surface and an adhesive layer on the other surface of the printable surface, wherein the supporting substrate is made of a liquid crystal polymer showing optical anisotropy in molten state.

DETAILED DESCRIPTION OF THE INVENTION

As a liquid crystal polymer showing optical anisotropy in molten state, used in the present invention, exemplified are whole aromatic or semi-aromatic polyester, polyimide, polyesteramide and the like, and resin compositions thereof. A liquid crystal polyester or a composition thereof is preferable, and a whole aromatic polyester or a composition containing thereof is more preferable.

The liquid crystal polyester here is a polyester called "thermotropic liquid crystal polymer". More specifically, examples thereof include:

(1) those comprising a combination of an aromatic dicarboxylic acid, an aromatic diol, and an aromatic hydroxycarboxyic acid;
(2) those comprising a combination of different kinds of aromatic hydroxycarboxylic acids;
(3) those comprising a combination of an aromatic dicarboxylic acid and a nuclear-substituted diol; and
(4) those obtainable by the reaction of a polyester such as polyethylene terephthalate with an aromatic hydroxycarboxylic acid;

and preferably forms an anisotropic molten product at a temperature of 400°C or lower. Further, in place of the aromatic dicarboxylic acid, the aromatic diol, or the aromatic hydroxycarboxylic acid, ester derivatives thereof can be used. The aromatic dicarboxylic acid, the aromatic diol, and the aromatic hydroxycarboxylic acid may have a substituent such as a halogen atom, an alkyl group, an aryl group or the like, on the aromatic group.

Examples of repeating units of the liquid crystal polyester include the following (1) repeating unit derived from aromatic dicarboxylic acid, and (2) repeating unit derived from aromatic diol, without being limited thereto.

(1) Repeating unit derived from aromatic dicarboxylic acid :

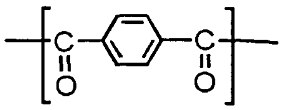 , 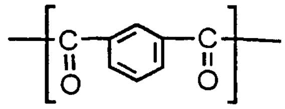 ,

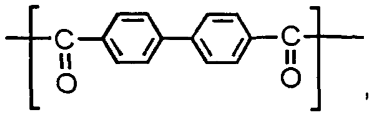 , 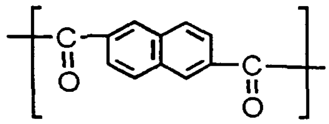 ,

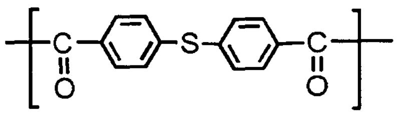 ,

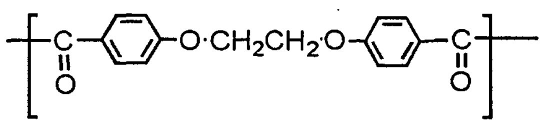

The aromatic ring in each of the above structural unit may be substituted with a halogen atom, an alkyl group, an aryl group or the like.

(2) Repeating unit derived from an aromatic diol:

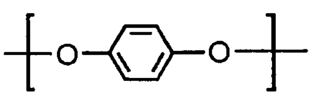 , 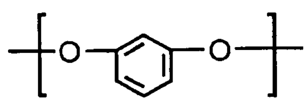 ,

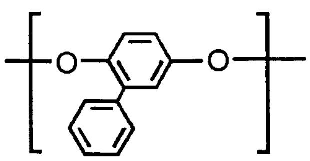 , 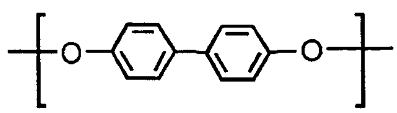 ,

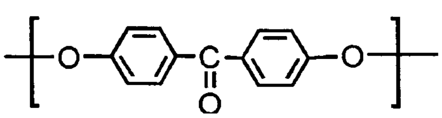 , 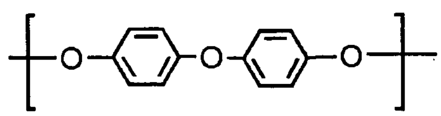 ,

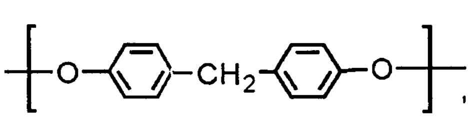 , 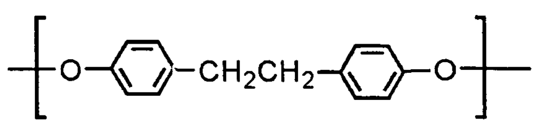 ,

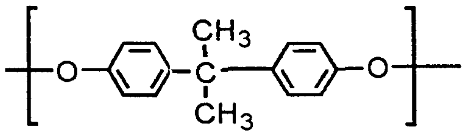
,
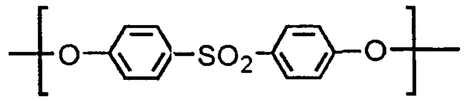
,

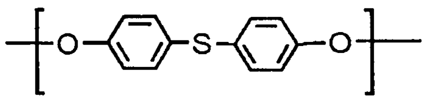
,
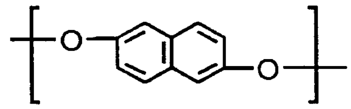
,

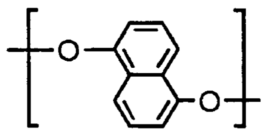

The aromatic ring in each of the above structural unit may be substituted with a halogen atom, an alkyl group, an aryl group or the like.

(3) Repeating unit derived from an aromatic hydroxycarboxylic acid:

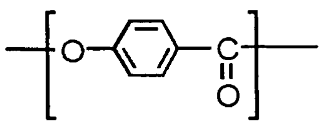
,
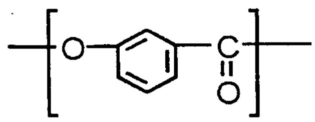
,

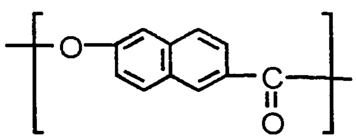
,
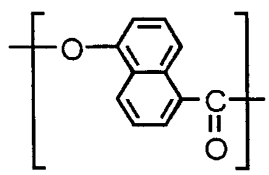

The aromatic ring in each of the above structural unit may be substituted with a halogen atom, an alkyl group, an aryl group or the like.

Liquid crystal polyesters including a repeating unit:

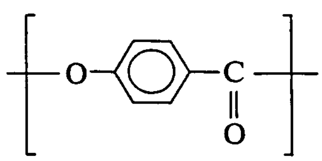

are particularly preferable in heat resistance, mechanical properties, and processability, and those including at least 30 mole % of the repeating unit are further preferable. Specifically, combinations of the repeating units shown as the following (I) - (VI) are suitable. Moreover, the wholly aromatic polyesters other than (IV) is still suitable in view of moisture proof property.

(I)

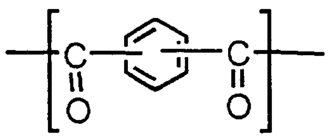

,

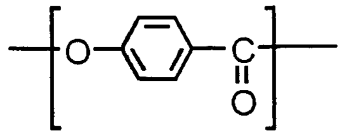

,

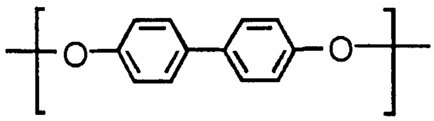

(II)

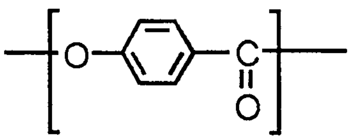

,

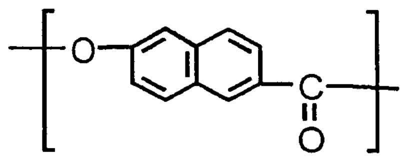

(III)

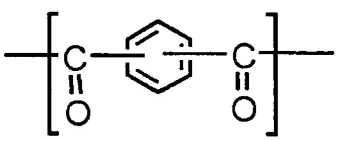

,

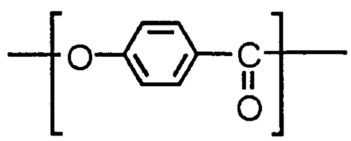

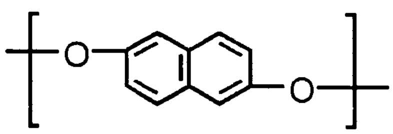

(IV)

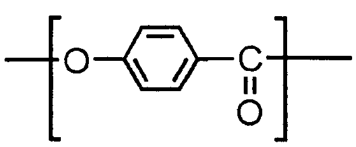

,

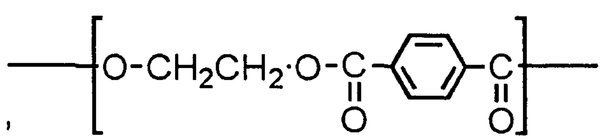

(V)

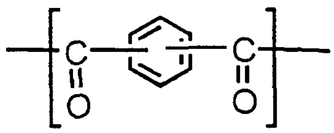
,
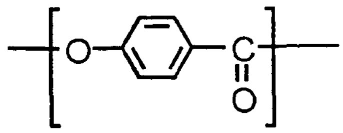
,
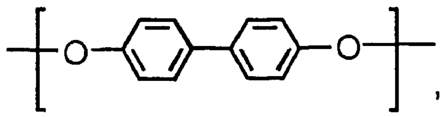
,
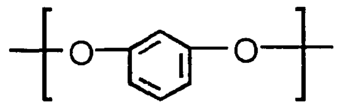

(VI)

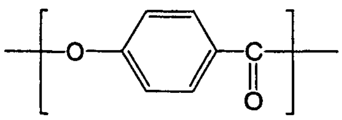
,
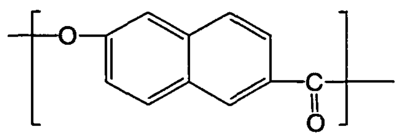

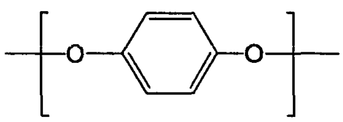
,
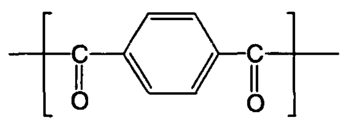
,

Production method of the above liquid crystal polyesters (I) to (VI) are disclosed in JP-B-47-47870, JP-B-63-3888, JP-B-63-3891, JP-B-56-18016, and JP-A-2-51523. Among these, combinations represented by (I), (II), and (IV) are preferable, and the combinations (I) and (II) are more preferable.

In the present invention, a liquid crystal polyester comprising: 30-80 % by mole of repeating unit (a'); 0-10 % by mole of repeating unit (b'); 10-25 % by mole of repeating unit (c'); and 10-35 % by mole of repeating unit (d'); is preferably used for the field where high heat resistance is required.

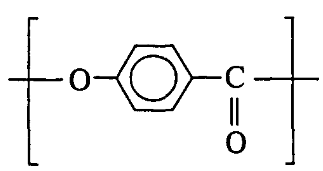
(a')

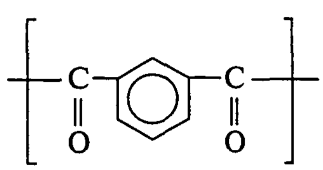
(b')

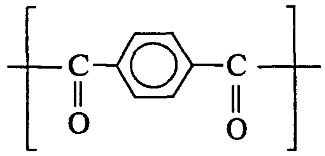 (c')

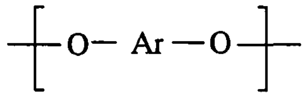 (d')

(In the formula, Ar is a divalent aromatic group.)
As the divalent aromatic group of repeating unit (d'), a divalent aromatic group in the above aromatic diol is suitable, and a wholly aromatic diol is preferable for use where especially high heat resistance is required.

In the indication label of the present invention, from standpoints such as an environmental problem, in the field required for easy abandonment, such as incineration after use, a liquid crystal polyester constituted with the combination of elements of only carbon, hydrogen and oxygen is used especially preferably, among the suitable combinations required for each fields exemplified so far.

In view of moldability and film whiteness, the liquid crystal polyester composition comprises preferably a liquid crystal polyester (A) as a continuous phase and a copolymer (B) containing a functional group reactive with liquid crystal polyester as a dispersed phase.

The component (B) used for the above liquid crystal polyester resin composition is a copolymer having a functional group reactive with liquid crystal polyester. As such a functional group reactive with liquid crystal polyester, any functional groups can be used as long as it has reactivity with a liquid crystal polyester. Concretely, exemplified are an oxazolyl group, an epoxy group, an amino group, etc., and preferably an epoxy group. The epoxy group etc. may exist as a part of other functional groups, and as such an example, a glycidyl group is exemplified.

In the copolymer (B), as a method of introducing such a functional group into a copolymer, it is not limited especially and can be carried out by the well-known methods. For example, it is possible to introduce a monomer having this functional group by copolymerization in a preparation stage of the copolymer. It is also possible to conduct a graft copolymerization of a monomer having this functional group to a copolymer.

Monomers having a functional group reactive with liquid crystal polyester, especially, monomers containing a glycidyl group are used preferably. As the monomers having a functional group reactive with liquid crystal polyester, an unsaturated glycidyl carboxylate and an unsaturated glycidyl ether represented by the general formula

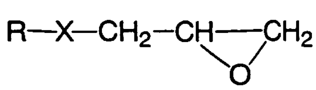

is used suitably.
R is a hydrocarbon group of 2-13 carbons having an ethylenically unsaturated bond, and X is -C(O)O-, $-CH_2$-O- or

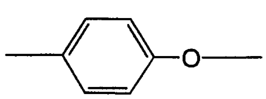
.

As unsaturated glycidyl carboxylate, exemplified are, for example: glycidyl acrylate, glycidyl methacrylate, itaconic acid diglycidyl ester, butene tri carboxylic acid triglycidyl ester, p-styrene glycidyl carboxylate, etc. As unsaturated glycidyl ether, exemplified are, for example:

vinyl glycidyl ether, allyl glycidyl ether, 2-methyl allyl glycidyl ether, methacryl glycidyl ether, styrene-p-glycidyl ether, etc.

As unsaturated glycidyl ether, exemplified are, for example: vinyl glycidyl ether, allyl glycidyl ether, 2-methyl allyl glycidyl ether, methacryl glycidyl ether, styrene-p-glycidyl ether, etc.

The above copolymer (B) having a functional group reactive with liquid crystal polyester, is suitably a copolymer having 0.1 to 30% by weight of a unsaturated glycidyl carboxylate unit and/or a unsaturated glycidyl ether unit.

Suitably, the above copolymer (B) having a functional group reactive with liquid crystal polyester is a copolymer having a heat of fusion of crystal of less than 3J/g. Moreover, as the copolymer (B), Mooney viscosity is suitably 3-70, more suitably 3-30, and especially suitably 4-25.

Here, Mooney viscosity means the value measured at 100 °C using a large rotor according to JIS K6300.

When it is outside the above ranges, heat stability or flexibility of the composition may deteriorate and it is not preferable.

The above copolymer (B) having a functional group reactive with liquid crystal polyester may be either a thermoplastic resin, a rubber or a composition thereof. Preferable is a rubber which give a molded body such as film or sheet, having excellent heat stability and flexibilty.

As a method of introducing such a functional group reactive with a liquid crystal polyester into a rubber, it is not limited especially and can be carry out by the well-known methods. For example, it is possible to introduce a monomer having the functional group by copolymerization in a preparation stage of the rubber. It is also possible to conduct a graft copolymerization of a monomer having the functional group to a rubber.

Concrete examples of the copolymer (B) having a functional group reactive with liquid crystal polyester, as a rubber having epoxy group, include a copolymer rubber of (meth)acrylate-ethylene-(unsaturated glycidyl carboxylate and/or unsaturated glycidyl ether).

Here, the (meth)acrylate is an ester obtained from an acrylic acid ormethacrylic acid and an alcohol. As the alcohol, an alcohol having 1-8 carbons is preferable. Concrete examples of the (meth)acrylates include methyl acrylate, methyl methacrylate, n-butyl acrylate, n-butyl methacrylate, tert-butyl acrylate, tert-butyl methacrylate, 2-ethylhexyl acrylate, 2-ethylhexyl methacrylate, etc. The (meth)acrylates can be used alone or as a mixture of two or more therof.

In the copolymer rubber of the present invention, the (meth)acrylate unit is suitably more than 40 and less than 97% by weight, more suitably 45 - 70 % by weight, the ethylene unit is suitably not less than 3% by weight and less than 50% by weight, more suitably 10 - 49 % by weight, and the unsaturated glycidyl ether unit and/or unsaturated glycidyl ether unit is suitably 0.1 - 30 % by weight, more suitably 0.5 - 20 % by weight.

In case of outside the above range, heat stability and mechanical properties of the obtained molded product, such as film or sheet may become insufficient, and it is not preferable.

The copolymer rubber can be prepared by usual methods, for example, bulk polymerization, emulsion polymerization, solution polymerization, etc. using a free radical initiator. Typical polymerization methods are those described in JP-A-48-11388, JP-A-61-127709, etc., and it can be prepared under the existence of a polymerization initiator which generates a free radical, at the pressure of more than 500 kg/cm$^2$, and the temperature of 40-300 °C.

Examples of other rubbers which can be used as copolymer (B) include, an acryl rubber having a functional group reactive with liquid crystal polyester, and a block copolymer rubber of vinyl aromatic hydrocarbon compound-conjugated diene compound having a functional group reactive with liquid crystal polyester.

The acryl rubber here is suitably those having at least one monomer as a main component selected from the compound represented by the general formula (1) - (3)

$$CH_2{=}CH\text{-}C(O)\text{-}OR^1 \qquad (1)$$

$$CH_2{=}CH\text{-}C(O)\text{-}OR^2OR^3 \qquad (2)$$

$$CH_2{=}CR^4\text{-}C(O)\text{-}O(R^5(C(O)O)nR^6 \qquad (3)$$

(In the formula, $R^1$ is an alkyl group or a cyano alkyl group having 1-18 carbon atoms. $R^2$ is an alkylene group having 1-12 carbon atoms, $R^3$ is an alkyl group having 1-12 carbon atoms. $R^4$ is a hydrogen atom or methyl group, $R^5$ is an alkylene group having 3-30 carbon atoms, $R^6$ is an alkyl group or derivative thereof having 1-20 carbon atoms, and n is an integer of 1-20. )

Concrete examples of the alkyl acrylate represented by the above general formula (1) include, for example, methyl acrylate, ethyl acrylate, propyl acrylate, butyl acrylate, pentyl acrylate, hexyl acrylate, octyl acrylate, 2-ethylhexyl acrylate, nonyl acrylate, decyl acrylate, dodecyl acrylate, cyanoethyl acrylate, etc.

Moreover, examples of the alkoxyalkyl acrylate represented by the above general formula (2) include, for

example, methoxy ethyl acrylate, ethoxy ethyl acrylate, butoxy ethyl acrylate, ethoxy propyl acrylate, etc. These can be used alone or in combination of two or more, as a main component of the acryl rubber.

As a composition component of the acryl rubber, an unsaturated monomer which can be copolymerized with at least one monomer selected from the compounds represented by the above general formulas (1) - (3) can be used, according to requirements.

Examples of such unsaturated monomers include styrene, α-methyl styrene, acrylonitrile, halogenated styrene, methacrylonitrile, acryl amide, methacryl amide, vinyl naphthalene, N-methylol acrylamide, vinyl acetate, vinyl chloride, vinylidene chloride, benzyl acrylate, methacrylic acid, itaconic acid, fumaric acid, maleic acid, etc.

The suitable component ratio of the acryl rubber having a functional group reactive with liquid crystal polyester is : 40.0 - 99.9 % by weight of one monomer selected at least from compounds represented by the above general formulas (1) - (3); 0.1 - 30.0 % by weight of unsaturated glycidyl carboxylate and/or unsaturated glycidyl ether; 0.0 - 30.0 % by weight of one monomer which can be copolymerized with the unsaturated monomers selected at least from the compound represented by the above general formula (1) - (3).

If the component ratio of the acryl rubber is within the above range, heat resistance, impact resistance, and mold processing property of the composition are good, and it is preferable.

The preparation process of the acryl rubber is not especially limited, and well known polymerization method described, for example, in JP-A-59-113010, JP-A-62-64809, JP-A-3-160008, or WO 95/04764 can be used. It can be prepared under the existence of a radical initiator, by emulsion polymerization, suspension polymerization, solution polymerization, or the bulk polymerization.

Suitable examples the block copolymer rubber of vinyl aromatic hydrocarbon compound-conjugated diene compound having the above functional group reactive with liquid crystal polyester include: a rubber which is obtained by epoxidization of a block copolymer comprising (a) sequence mainly consisting of vinyl aromatic hydrocarbon compound, and (b) sequence mainly consisting of conjugated diene compound; or a rubber which is obtained by epoxidization of a hydrogenated product of said block copolymer.

Examples of the vinyl aromatic hydrocarbon compound include, for example, styrene, vinyltoluene, divinylbenzene, α-methyl styrene, p-methyl styrene, vinyl naphthalene, etc. Among them, styrene is suitable. Examples of the conjugated diene compound include, for example, butadiene, isoprene, 1,3-pentadiene, 3-butyl-1,3-octadiene, etc. Butadiene and isoprene are suitable.

The block copolymer of vinyl aromatic hydrocarbon compound-conjugated diene compound or the hydrogenated product thereof can be prepared by the well-known methods, for example, as described in JP-B-40-23798, JP-A-59-133203, etc.

As a rubber used as copolymer (B), copolymer rubber of (meth)acrylate-ethylene-(unsaturated glycidylcarboxylate and/or unsaturated glycidylether) is suitably used.

A rubber used as copolymer (B) is vulcanized according to requirements, and it can be used as a vulcanized rubber. Vulcanization of the above copolymer rubber of (meth)acrylate-ethylene-(unsaturated glycidylcarboxylate and/or unsaturated glycidylether) is attained by using a polyfunctional organic carboxylic acid, a polyfunctional amine compound, an imidazole compound, etc., without being limited thereto.

As a concrete example of a copolymer having a functional group reactive with liquid crystal polyester (B), examples of a thermoplastic resin having epoxy group include an epoxy group containing ethylene copolymer comprising: (a) 50 - 99 % by weight of ethylene unit, (b) 0.1 - 30 % by weight of unsaturated glycidylcarboxylate unit and/or unsaturated glycidylether unit, preferably 0.5 - 20 % by weight, and (c) 0 - 50 % by weight of ethylenically unsaturated ester compound unit.

Examples of the ethylenically unsaturated ester compound (c) include vinyl ester of carboxylic acid and alkyl ester of α,β - unsaturated carboxylic acid, etc. such as: vinyl acetate, vinyl propionate, methyl acrylate, ethyl acrylate, butyl acrylate, methyl methacrylate, ethyl methacrylate, and butyl methacrylate. Vinyl acetate, methyl acrylate and ethyl acrylate are especially preferable.

Concrete examples of the epoxy group containing ethylene copolymer include, for example, a copolymer comprising ethylene unit and glycidyl methacrylate unit, a copolymer comprising ethylene unit, glycidyl methacrylate unit and methyl acrylate unit, a copolymer comprising ethylene unit, glycidyl methacrylate unit and ethyl acrylate unit, and a copolymer comprising ethylene unit, glycidyl methacrylate unit and vinyl acetate unit etc.

Melt index (hereinafter referred to as MFR. JIS K6922-2, at 190 °C, 2.16kg load) of the epoxy group containing ethylene copolymer is suitably 0.5-100g/10 minutes, more preferably 2-50g/10 minutes . Although melt index may be outside this range When the melt index is more than 100g/10 minutes, it is not preferable in respect to mechanical physical properties of the composition. When the melt index is less than 0.5 g / 10 minutes, compatibility of component (A) with a liquid crystal polyester is inferior and it is not preferable.

The epoxy group containing ethylene copolymer has suitably a bending shear modulus of 10 - 1300 $kg/cm^2$, more suitably 20-1100$kg/cm^2$. When the bending shear modulus is outside the range, mold processing property and mechanical properties of the composition may become inadequate.

The epoxy group containing ethylene copolymer is manufactured by high pressure radical polymerization method of copolymerizing usually an unsaturated epoxy compound and ethylene, under existence of a radical generating agent, at a pressure of 500 to 4000 atm and at 100-300 °C, under existence or un-existing of a suitable solvent and a chain transfer agent. It is manufactured also by a method of conducting molten graft copolymerization in an extruder, mixing an unsaturated epoxy compound and a radical generating agent with polyethylene.

The above liquid crystal polyester resin composition is suitably a resin composition comprising (A) a liquid crystal polyester as continuous phase, and (B) a copolymer having a functional group reactive with liquid crystal polyester as dispersed phase. When liquid crystal polyester is not continuous phase, gas barrier property, heat resistance, etc. of a film comprising the liquid crystal polyester resin composition may fall remarkably.

In the resin composition of the copolymer and the liquid crystal polyester having such a functional group, although details of the mechanism are unknown it is thought that a reaction occurs between components (A) and component (B) in the composition, while component (A) forms continuous phase, component (B) disperses minutely, thus the moldability of the composition is improved.

One embodiment of the above liquid crystal polyester resin composition is a resin composition comprising (A) 56.0 - 99.9 % by weight of a liquid crystal polyester, suitably 65.0 - 99.9 % by weight, further suitably 70 - 98 % by weight, (B) 44.0 - 0.1 % by weight of a copolymer having a functional group reactive with liquid crystal polyester, suitably 35.0 - 0.1 % by weight, further suitably 30 - 2 % by weight. When component (A) is less than 56.0 % by weight, the water vapor barrier property and heat resistance of the film obtained from the composition may fall. Moreover, when component (A) is more than 99.9 % by weight, the mold processing property of the composition may fall, and the price will become expensive as well.

Well-known method can be used as the method of manufacturing such a liquid crystal polyester resin composition. For example, each component is mixed in a solution state, and then evaporating the solvent, or precipitating it in the solvent. From a industrial standpoint, a method of melt-kneading each component of the above composition in molten state is suitable. For melt-kneading, currently generally used kneading machines such as an extruder having single or twin screws and various kinds of kneaders, can be used. High kneading machine having twin-screw is especially preferable.

In melt-kneading, the setting temperature of the cylinder of kneading machine is suitably in the range of 200-360°C, and further more suitably 230-350°C.

In kneading, each component may be mixed uniformly by a machine such as a tumbling mixer or a Henschel mixer beforehand. A method can be used as well, where each component may be quantitatively supplied separately into a kneading machine, with omitting the previous mixing, if necessary.

To the liquid crystal polymer used for the present invention, various kinds of additives such as organic filler, antioxidant, heat stabilizer, light stabilizer, flame retardant, lubricant, antistatic agent, inorganic or organic colorant, rust preventives, crosslinking agent, foaming agent, fluorescent agent, surface smoothing agent, surface gloss improver, release modifiers such as fluoropolymer, etc., can be further added in the manufacturing process, or the subsequent process according to requirements.

The present invention uses the resin laminate as described above having a layer of a liquid crystal polymer, and the liquid crystal polymer is preferably obtained by inflation film formation which can provide simultaneous bi-axial drawing. Namely, the liquid crystal polymer is fed to a melt kneading extruder equipped with a die of annular slit, and melt-kneaded at a cylinder setting temperature of preferably from 200 to 360°C, further preferably from 230 to 350°C. Then, a melted resin is extruded toward upper direction or lower direction from an annular slit of an extruder, to give a cylindrical film (this direction (longitudinal direction) is the MD direction, and a direction crossing this in a film plane is the TD direction). The annular slit interval is usually from 0.1 to 5 mm, preferably from 0.5 to 2 mm, and the diameter of the annular slit is from 20 to 1000 mm, preferably from 50 to 300 mm.

In inflation molding (film formation), the preferable blow ration is usually from 1.5 to 10 and the preferable MD drawing magnification is from 1.5 to 40.

When setting conditions in inflation molding are out of the above-mentioned ranges, it may be difficult to obtain a film of high strength having uniform thickness and no wrinkle.

The film thickness is preferably 3 μm or more and 500 μm or less, more preferably 5 μm or more and 200 μm or less. When less than 3 μm, handling may be difficult, undesirably, and when over 500 μm, application of an adhesive in a coating line may be difficult, undesirably.

Expanded film is taken over through nip rolls, after air-cooling or water-cooling of the circumference.

Inflation film-formation, conditions can be selected so that a melted body film in the form of cylinder is expanded at uniform thickness and smooth surface condition, depending on the properties of a composition.

In methods other than inflation film-formation, a film is not bi-axially drawn, failing to obtain necessary minimum strength, and even if a film is bi-axially drawn sequentially by other method, production cost increases too much, in some cases.

As the film made of a liquid crystal polymer showing optical anisotropy in molten state, which is a supporting

substrate in the present invention, that having large tensile elastic modulus along the MD direction and excellent dimension stability is obtained. This tensile elastic modulus is preferably 1500 kgf/mm or more, further preferably 1800 kgf/mm or more. This film has a constantly usable heat resistant temperature of preferably 140°C or more, further preferably 160°C or more. Here, the constantly usable heat resistant temperature means a temperature at which time required for decrease of the tensile breakage strength along the MD direction to half is 40000 hours.

This film has a water absorption of preferably 0.2% or less, further preferably 0.1% or less. When the water absorption is large, drying at high temperature over long period of time is necessary, undesirably, when used as an indication label. This film has a water vapor permeability of preferably 1.0 $g/m^2 \cdot 24$ hr or less, further preferably 0.8 $g/m^2 \cdot 24$ hr or less. When the water vapor permeability is large, stickiness may decrease under high humidity.

Further, this film has a soldering heat resistant temperature of preferably 250°C or more, further preferably 280°C ormore. Here, the soldering heat resistant temperature means the maximum temperature at which foaming due to shrinkage and thermal decomposition is not recognized when a film is immersed in a heated solder bath for 10 seconds.

A film made of a liquid crystal polymer showing optical anisotropy in molten state, which is a supporting substrate in the present invention, has a surface free energy of preferably 35 dyne/cm or more. When less than this, application of an adhesive on a supporting substrate may manifest unevenness, and when an indication label is stuck to a painted plate, resin, metal, wood and the like for a long period of time, an adhesive may be transferred to an adhering body, or leave a stick trace. Further, print may become unclear, and when a layer to be printed is provided, there is a possibility of peeling of the layer to be printed in use for a long period of time, undesirably. When the resulted liquid crystal polymer film has a surface free energy of less than 35 dyne/cm, surface treatments such as corona treatment and the like may be performed.

A film made of a liquid crystal polymer showing optical anisotropy in molten state, which is a supporting substrate in the present invention, has a whiteness of preferably 40 or more, more preferably 50 or more, further preferably 55 or more. If 40 or less, when printing is conducted directly on the supporting substrate, the content may not be read, undesirably. Here, the whiteness is a value calculated from L value, a value and b value measured by a color difference meter according to JIS Z8722.

The indication label of the present invention is obtained by laminating an adhesive layer (involving so-called sticky layer) on one surface of a supporting substrate made of a liquid crystal polymer showing optical anisotropy in molten state. As this adhesive, generally known acrylic, rubber-based and silicone-based adhesives and the like can be used without limitation. As the lamination method, an application method is usually adopted. The application method is not particularly restricted, and for the acrylic adhesive, emulsion type and solvent type adhesives are used, for the rubber-based adhesive, emulsion type, solvent type and hot melt type adhesives are used, and for the silicone-based adhesive, a solvent type adhesive is used, mainly.

Here, as the acrylic adhesive, exemplified are copolymers comprising a main monomer for manifesting stickiness, a comonomer for enhancing coagulation force, and a monomer having a functional group for improving adhesiveness or for reaction with a cross-linking agent, as constituent components. As the main monomer, for example, alkyl acrylates having 2 to 14 carbon atoms in the alkyl group such as ethyl acrylate, n-butyl acrylate, n-octyl acrylate and the like, and alkyl methacrylates having 4 to 14 carbon atoms in the alkyl group such as isobutyl methacrylate, n-octyl methacrylate and the like are listed, and two or more of them may also be combined.

As the comonomer for enhancing coagulation force, alkyl acrylates and alkyl methacrylates having 1 to 8 carbon atoms in the alkyl group such as methyl acrylate, methyl methacrylate, ethyl methacrylate, propyl methacrylate and the like, further, styrene, vinyl acetate, acrylonitrile, methacrylonitrile, acrylamide and the like are listed, and two or more of them may also be combined.

Since the liquid crystal polymer which is used as the supporting substrate in the present invention is excellent also in solvent resistance, various additives can be added appropriately to an adhesive.

Further, for improvement in adhesion and for reaction with a cross-linking agent, monocarboxylic acids such as acrylic acid, methacrylic acid and the like, polyvalent carboxylic acids such as maleic acid, glutamic acid and the like and anhydrides thereof, further, carboxylic acid derivatives having a hydroxyl group such as hydroxyethyl methacrylate, hydroxypropyl methacrylate and the like, are listed, and two or more of them may also be combined.

As the cross-linking agent, epoxy resins, melamine resins, urea resins, polyisocyanates, phenol compounds, amino compound, acid anhydrides, metal oxides and the like are generally used, and they can be appropriately selected appropriately as to correspond according to the kind of the above-mentioned monomer having a functional group.

The silicone-based adhesive is composed of two main components, a polymer component and a cross-linking resin. As this polymer, mainly used are polydimethylsiloxane or polydimethyldiphenylsiloxane of higher molecular weight, containing $-SiO(CH_3)_2-$ as a repeating unit and having remaining silanol groups (SiOH) on the end of a long chain of the polymer. The cross-linking resin has a three dimensional silicate structure, and a trimethylsiloxy group is present at the end.

A silanol group of the polymer end and a trimethylsiloxy group on the end of a cross-linking resin can be

appropriately reacted to obtain a partially cross-linked polysiloxane. It is hypothesized that, by partial cross-linking, a long chain part, cross-kinked part and end part cause microscopically phase separation to form a discontinuous phase, manifesting stickiness.

For enhancing the stickiness of the silicone-based adhesive, the siloxane cross-linking density can also be increased, and as the catalyst, organic peroxides, aminosilane, organic acid metal salts and the like can be used.

As the rubber-based adhesive, natural rubber-based adhesives, styrene/butadiene latex-based adhesives, thermoplastic rubber-based adhesives, butyl rubber and the like can be used.

As the adhesive, acrylic adhesives and silicone-based adhesives are preferably used from the standpoint of heat resistance. The rubber-based adhesive may be insufficient in heart resistance and aging resistance. Silicone-based adhesive are particularly preferably used from the standpoint of moisture proof . When an adhesive having stickiness is used, a releasing film and releasing paper can also be used on the outside of a sticky layer.

As the adhesive in the indication label of the present invention, generally known epoxy-based adhesives, silicone-based pressure-sensitive adhesives, isocyanate-based adhesives and the like can be used, also. The silicone-based pressure-sensitive adhesive is not particularly restricted, and known adhesives can be used. Regarding the epoxy-based adhesive, epoxy resins which can be hardened with a hardener are used, and as the epoxy resin, known adhesives such as glycidyl ether type adhesives, glycidyl ester type adhesives, glycidylamine type adhesives, aliphatic epoxide type adhesives and the like, are used. Particularly for obtaining an adhesive layer endowed with stickiness excellent in initial adhesion, it is also preferable to use an acrylic resin together. In this case, as the acrylic resin, the acrylic adhesives exemplified for the above-mentioned adhesive are preferably used.

As the adhesive, silicone-based and epoxy-based adhesives are preferably used from the standpoint of heat resistance, and silicone-based adhesives are preferably used from the standpoint of moisture proof.

The printable surface of the indication label of the present invention means a surface of the supporting substrate . Information can be recorded on the surface directly. On the other hand, another layer may be laminated on the supporting substrate, as a printable surface, e.g. white coating. The printing in the present invention includes also cases of printing process without plate-making such that electronic information is directly recorded and copied by a method such as ink jet and the like, the cases being used recently, and so-called printing in which plate-making for mass-reproduction of original drawings is conducted. The content of printing is not particularly restricted to letters, marks, bar codes, specific colors, pictures and the like, any matters may be printed providing the user can recognize. Regarding the printing method, direct printing may be conducted providing the whiteness of a supporting substrate made of the above-mentioned liquid crystal polymer coincides with use, alternatively, a white coat may be performed on the above-mentioned supporting substrate or printing may be effected after providing a layer to be printed for printing of other color, when more clear white is required or when other color such as red, blue and the like is printed, depending on application. As the layer to be printed, for example, those obtained by adding an inorganic powder to liquid organic binder in the form of solution or melted body are preferably used. As the organic binder, epoxy resins, hydrocarbon-based resins, vinyl-based resins, acrylic resins, polyester-based, polyurethane resins and the like are used, and particularly, it is preferable to use epoxy resins which can be hardened with a hardener, and to use other organic binder together with this resin. As the inorganic powder, white metal powders such as aluminum and the like, and white metal oxides such as titanium oxide, titanium complex oxides like magnesium titanate and the like, are preferably used.

When a layer to be printed is formed, it is also possible to compound suitable additives for improvement of adhesion with the above-mentioned liquid crystal polymer, regulation of the viscosity of application liquid, and improvement of hardness after application and printing property.

Thus, the indication label of the present invention in which a supporting substrate is made of a liquid crystal polymer showing optical anisotropy in molten state and the supporting substrate having printable surface and a sticky or adhesive layer on another surface, is produced, however, the form thereof is not particularly restricted and the indication label may be in the form of film, tape, piece and the like.

EXAMPLES

The following examples will described the present invention, but do not limit the scope of the invention.

(1) Component (A), liquid crystal polymer

(i) 8.3 kg (60 mol) of p-acetoxybenzoic acid, 2.49 kg (15 mol) of terephthalic acid, 0.83 kg (5 mol) of isophthalic acid and 5.45 kg (20.2 mol) of 4,4'-diacetoxydiphenyl were charged in a polymerization vessel equipped with a stirring blade in the form of comb, and the mixture was heated while stirring under a nitrogen gas atmosphere, and polymerized at 330°C for 1 hours. The polymerization was effected under vigorous stirring while liquefying an acetic acid gas by-produced during this operation by a cooling tube and recovering and removing the liquid. Then, the system was cooled gradually, and the resulted polymer at 200°C was removed out of the system. This resulted polymer was ground by a

hammer mill manufactured by Hosokawa Micron Corp., to provide particles of 2.5 mm or less. These were further treated at 280°C for 3 hours under a nitrogen gas atmosphere in a rotary kiln, to obtain a whole aromatic polyester in the form of particle having a flow temperature of 324°C, composed of the following repeating structural units.

Here, the flow temperature means a temperature at which the melt viscosity is 48000 poise when a resin heated at a temperature rising rate of 4°C /min is extruded through a nozzle having an internal diameter of 1 mm and a length of 10 mm under a load of 100 kgf/cm$^2$ using a flow tester CFT-500 type manufactured by Shimadzu Corp.

Hereinafter, this liquid crystal polyester is abbreviated as A-1. This polymer showed optical anisotropy under pressure at 340°C or more. The repeating structural units of the liquid crystal polyester A-1 are as described below.

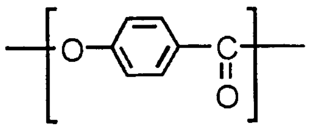 :

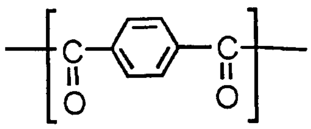 :

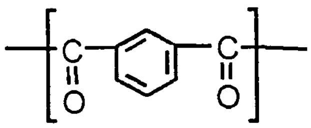 :

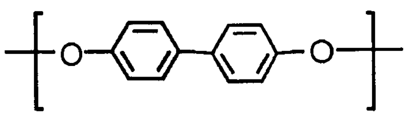

**= 60:15:5:20**

(ii) 16.6 kg (12.1 mol) of p-hydroxybenzoic acid, 8.4 kg (4.5 mol) of 6-hydroxy-2-naphthoic acid and 18.6 kg (18.2 mol) of acetic anhydride were charged in a polymerization vessel equipped with a stirring blade in the form of comb, and the mixture was heated while stirring under a nitrogen gas atmosphere, and polymerized at 320°C for 1 hours, and further, polymerized at 320°C for 1 hours under a reduced pressure of 2.0 torr. Acetic acid by-produced during this operation was distilled out of the system continuously. Then, the system was cooled gradually, and the resulted polymer at 180°C was removed out of the system. This resulted polymer was ground by a hammer mill manufactured by Hosokawa Micron Corp., to provide particles of 2.5 mm or less. These were further treated at 240°C for 5 hours under a nitrogen gas atmosphere in a rotary kiln, to obtain a whole aromatic polyester in the form of particle having a flow initiation temperature of 270°C, composed of the following repeating structural units. Hereinafter, this thermoplastic resin is abbreviated as A-2.

This thermoplastic resin showed optical anisotropy under pressure at 280°C or more, when observed by a polarization microscope. The ratio of repeating structural units of A-2 is as described below.

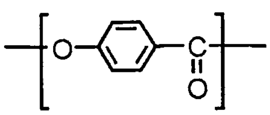 :

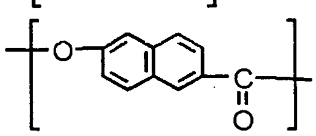

**= 73:27**

(2) Component (B)

(i) Rubber of methyl acrylate/ethylene/glycidyl methacrylate = 59.0/38.7/2.3 (ratio by weight), having a Mooney viscosity of 15 and a fusion heat of a crystal of less than 1 J/g was obtained according to a method described in Example 5 of JP-A No. 61-127709. This rubber may be abbreviated as B-1.

This Mooney viscosity means a value measured by using a large rotor at 100°C according to JIS K6300.

The fusion heat of a crystal was measured by heating a sample 10g at a scanning rate of 10°C/min, using DSC (DSC-50, manufactured by Shimadzu Corp.), but a melting point could not be observed and the fusion heat was not obtained.

(3) Adhesive

97 parts by weight of n-butyl acrylate, 3 parts by weight of acrylic acid and 0.3 parts by weight of lauroyl peroxide as a polymerization initiator were dissolved in ethyl acetate, and reacted in a nitrogen atmosphere at the reflux temperature of ethyl acetate for 14 hours, to obtain an acrylic copolymer. A 40% ethyl acetate solution containing the resulted acrylic copolymer was mixed with 0.1 parts by weight of an epoxy-based cross-linking agent, to obtain an adhesive solution. Hereinafter, this is sometimes called T-1.

(4) Methods of measuring water vapor permeability and water absorption of film

<Water vapor permeability>

The water vapor permeability was measured according to JIS Z0208 (cup method) at a temperature of 35°C and a relative humidity of 90%. The unit was $g/m^2 \cdot 24\ hr \cdot 1\ atm$.

The water vapor permeability was not reduced by film thickness.

<Water Absorption>

A substrate film was dried by heating at 120°C for 2 hours in a hot air oven, the weight after drying being represented by A, and this film was allowed to stand still in a room kept at constant temperature and constant humidity controlled at 20°C and 70% RH, the weight after 24 hours being represented by B, and the water absorption was measured according to the following formula.

$$\text{Water absorption (\%)} = \{(B-A)/B\} \times 100$$

(5a) Tensile test of film

The tensile test was conducted according to JIS C2318.

(5b) Method of measuring heat resistance of film

<Constantly usable heat resistant temperature>

Films were placed in circulation ovens kept at 50°C, 100°C, 150°C, 200°C and 250°C, and removed every 500 hours from 0 to 2500 hours, once left in a constant temperature and constant humidity room (23°C, 55% RH), then, the tensile strengths along the MD direction were measured, to obtain a curve of strength depending on time . From this curve, time at which the strength at 0 hour becomes half value was read at each temperature, and the resulted times (half life) were plotted against temperature to obtain a curve, and temperature at which the half life was 40000 hours was read as the constantly usable heat resistant temperature.

<Soldering heat resistant temperature>

Regarding the soldering heat resistant temperature, a film was immersed in a heated solder bath for 10 seconds, and the maximum temperature at which foaming due to shrinkage and thermal decomposition was not recognized was evaluated.

(6) Evaluation of surface free energy of supporting substrate film

A standard solution was applied and the surface free energy was judged according to JIS K6768.

(7) Method of evaluating indication label

The resulted indication label was pasted on a painted iron plate, and treated in a constant temperature and constant humidity room set at 80°C and 80% RH, and the result was evaluated by ○ when the tape was not peeled, and × when the tape was peeled. The condition of the printed surface in this procedure was also observed.

(8) Measurement of whiteness

L value, a value and b value were measured of a supporting substrate film, by using a color difference meter Z-1001-DP, manufactured by Nippon Denshoku Kogyo K.K., and the whiteness was calculated according to JIS Z8722 according to the following formula:

$$\text{Whiteness (W)} = L+3a-3b.$$

Example 1

A-2 and B-1 were melt-kneaded at a compounding ratio of 85 wt%:15 wt% using a TEX-30 type twin-axial extruder manufactured by The Japan Steel Works, Ltd. at a cylinder setting temperature of 305°C and a screw revolution of 250 rpm, to obtain a composition comprising A-2 as a continuous phase and B-1 as a disperse phase. This composition pellet showed optical anisotropy under press at temperatures of 280°C or more. This composition is called S-1, in some cases.

S-1 was melt-kneaded using a 60 mmϕ single-screw extruder equipped with a cylindrical die at a cylinder setting temperature of 350°C and a screw revolution of 60 rpm, and the melted resin was extruded toward upper direction through a cylindrical die having a diameter of 50 mm and a lip interval of 1.0 mm at a die setting temperature of 348°C, and dried air was pressed into a hollow part of the resulted cylindrical film to swell the film, then, cooled before passing through nip rolls, to obtain a film. The blow ratio was 4 and the draw down ratio was 10, and the actually measured average thickness of the film was 26 μm. The waver vapor permeability of this film was as excellent as 0.2 ($g/m^2 \cdot 24\ h \cdot 1\ atm$) and the water absorption there of was as excellent as 0.04%. The tensile elastic modulus along the MD direction was 3000 kgf/mm and the elongation at break was 2% or less.

The constantly usable heat resistant temperature was 147°C. This film has a surface free energy of 40 dyne/cm. The whiteness was 66. This filter is called F-1, in some cases.

T-1 was applied on F-1 and dried for 2 hours in an explosion resistant circulation oven at 60°C, and alphabets and numbers were printed with carbon ink on the surface on which T-1 was not applied, to obtain an indication label TP-1.

TP-1 was pasted on a painted iron plate, and treated in a constant temperature and constant humidity room set at 80°C and 80% RH for 3 hours, to recognize no peeling, evaluated by ○. The printed surface observed in this procedure also showed no abnormality.

Example 2

A-1 and B-1 were melt-kneaded at a compounding ratio of 80 parts by weight:20 parts by weight using a TEX-30 type twin-axial extruder manufactured by The Japan Steel Works, Ltd. at a cylinder setting temperature of 350°C and a screw revolution of 250 rpm, to obtain a composition comprising A-1 as a continuous phase and B-1 as a disperse phase. This composition pellet showed optical anisotropy under press at temperatures of 340°C or more. This composition is called D-2, in some cases.

D-2 was melt-kneaded using a 60 mmϕ single-screw extruder equipped with a cylindrical die at a cylinder setting temperature of 350°C and a screw revolution of 60 rpm, and the melted resin was extruded toward upper direction through a cylindrical die having a diameter of 50 mm and a lip interval of 1.0 mm at a die setting temperature of 348°C, and dried air was pressed into a hollow part of the resulted cylindrical film to swell the film, then, cooled before passing through nip rolls, to obtain a film. The blow ratio was 4.0 and the draw down ratio was 20, and the actually measured average thickness of the film was 25 μm. The waver vapor permeability of this film was as excellent as 0.4 ($g/m^2 \cdot 24\ h \cdot 1\ atm$) and the water absorption there of was as excellent as 0.05%. The tensile elastic modulus along the MD direction was 2000 kgf/mm and the elongation at break was 2% or less.

The constantly usable heat resistant temperature was 170°C. The soldering heat resistant temperature was 285°C. This film has a surface free energy of 40 dyne/cm. The whiteness was 58. This film is called F-2, in some cases.
T-1 was applied on F-2 and dried for 2 hours in an explosion resistant circulation oven at 60°C, and five 50 mm straight lines were printed with carbon ink on the surface on which T-1 was not applied, to obtain an indication label TP-2.
TP-2 was pasted on a painted iron plate, and treated in a constant temperature and constant humidity room set at 80°C and 80% RH for 3 hours, to recognize no peeling, evaluated by ○. The printed surface observed in this procedure also showed no abnormality.
Further, TP-2 was pasted on a painted iron plate (dark gray) and passed through a solder reflow furnace controlled at 260°C over 10 seconds, however, the lengths and forms of the printed 50 mm straight lines were still excellent. Since the whiteness of the substrate film was 58, meaning white-based color, black printing could also be recognized visually. In addition, TP-2 was pasted was pasted on a painted iron plate, and treated in a constant temperature and constant humidity room set at 80°C and 80% RH for 2 hours, then, further passed through the above-mentioned reflow furnace, to recognize no change, and the length, form and visibility of the printed line were also excellent.

Comparative Example 1

The water vapor permeability of a commercially available PET film (Espet, manufactured by Toyobo Co. Ltd.) having a thickness of 25 μm was measured to find it was 8.4 (g/m$^2$ · 24 h·1 atm).
This film had a surface free energy of 34 dyne/cm, and the constantly usable heat resistant temperature was 110°C. This film is called F-3, in some cases.
T-1 was applied on F-3 and dried, and an indication label TP-3 was obtained in the same manner as in Example 2.
TP-3 was pasted on a painted iron plate, and treated in a constant temperature and constant humidity room set at 80°C and 80% RH for 3 hours, to recognize peeling, evaluated by ×.
Further, TP-3 was pasted on a painted iron plate (dark gray) and passed through a solder reflow furnace controlled at 260°C over 10 seconds, however, the substrate film shrank, and the printed five straight lines deformed to show shape which could not be recognized as straight line. Further, since the supporting substrate was transparent, the color of the painted iron plate permeated, and recognition of the printed straight line was difficult even directly after printing with carbon ink or before heat treatment.

Comparative Example 2

The water vapor permeability of a commercially available polyimide film (manufactured by Toray-Dupont) having a thickness of 25 μm was measured to find it was 61 (g/m$^2$ · 24 h · 1 atm). This film is called F-4, in some cases.
T-1 was applied on F-4 and dried, and an indication label TP-4 was obtained in the same manner as in Example 2.
TP-4 was pasted on a painted iron plate, and treated in a constant temperature and constant humidity room set at 80°C and 80% RH for 3 hours, to recognize partial peeling, evaluated by ×.
Further, TP-4 was pasted on a painted iron plate (dark gray) and passed through a solder reflow furnace controlled at 260°C over 10 seconds, however, the substrate film showed not shrinkage and the like. However, since the supporting substrate was brow semi-transparent, the color of the painted iron plate permeated, and recognition of the straight line printed with carbon black was difficult. In addition, TP-4 was pasted on the painted iron plate, and treated in a constant temperature and constant humidity room set at 80°C and 80% RH for 2 hours, further, passed through the above-mentioned reflow furnace, to recognize deformation near the surface which was supposed to be ascribable to vaporization of absorbed water, and the printed line deformed.
The indication label of the present invention is excellent not only in heat resistance but also in hydroscopic resistance, therefore, it is suitably applied as an indication label used under high temperature and high humidity and the like.

**Claims**

1. An indication label comprising a supporting substrate having a printable surface and an adhesive layer on the other surface of the printable surface, wherein the supporting substrate is made of a liquid crystal polymer showing optical anisotropy in molten state.

**2.** The label according to Claim 1 wherein the liquid crystal polymer showing optical anisotropy in molten state has a constantly usable heat resistant temperature of 140°C or more.

**3.** The label according to Claim 1 or 2 wherein the liquid crystal polymer showing optical anisotropy in molten state has a soldering heat resistant temperature of 250°C or more.

**4.** The label according to Claim 1 or 2 wherein the liquid crystal polymer showing optical anisotropy in molten state has a water vapor permeability of 1.0 $g/m^2 \cdot 24$ hr or less.

**5.** The label according to Claim 1 or 2 wherein the liquid crystal polymer showing optical anisotropy in molten state has a water absorption of less than 0.2%.

**6.** The label according to Claim 1 or 2 wherein the liquid crystal polymer showing optical anisotropy in molten state has a surface free energy of 35 dyne/cm or more.

**7.** The label according to Claim 1 or 2 wherein the liquid crystal polymer showing optical anisotropy in molten state has a whiteness (W) of 40 or more.

**8.** The label according to Claim 1 or 2 wherein the liquid crystal polymer showing optical anisotropy in molten state is a whole aromatic liquid crystal polyester.

**9.** The label according to Claim 1 wherein the liquid crystal polymer showing optical anisotropy in molten state is a liquid crystal polyester resin composition comprising

(A) a liquid crystal polyester, as a continuous phase, and
(B) a copolymer having a functional group reactive with the liquid crystal polyester, as a disperse phase.

**10.** The label according to Claim 9 wherein the liquid crystal polymer showing optical anisotropy in molten state is a composition obtained by melt-kneading 56.0 to 99.9% by weight of the liquid crystal polyester (A) and 44.0 to 0.1% by weight of the copolymer (B) having a functional group reactive with the liquid crystal polyester.

**11.** The label according to Claim 9 or 10 wherein the functional group reactive with the liquid crystal polyester is an epoxy group, oxazolyl group or amino group.

**12.** The label according to Claim 9 or 10 wherein the copolymer (B) having a functional group reactive with the liquid crystal polyester is a copolymer containing 0.1 to 30% by weight of an unsaturated glycidyl carboxylate unit and/or an unsaturated glycidyl ether unit.

**13.** The label according to Claim 9 or 10 wherein the copolymer (B) having a functional group reactive with the liquid crystal polyester is rubber having an epoxy group.

**14.** The label according to Claim 9 or 10 wherein the copolymer (B) having a functional group reactive with the liquid crystal polyester is a thermoplastic resin having an epoxy group.

**15.** The label according to Claim 9 or 10 wherein the liquid crystal polyester (A) is obtained by reacting an aromatic dicarboxylic acid, aromatic diol and aromatic hydroxycarboxylic acid.

**16.** The label according to Claim 9 or 10 wherein the liquid crystal polyester (A) is obtained by reacting different kinds of aromatic hydroxycarboxylic acids.

**17.** The label according to Claim 1 or 2 wherein the adhesive constituting the adhesive layer comprises an acrylic adhesive as the main component.

**18.** The label according to Claim 1 or 2 wherein the adhesive constituting the adhesive layer comprises a silicone-based adhesive as the main component.

**19.** The label according to Claim 17 wherein the acrylic adhesive is a copolymer.

**20.** The label according to Claim 1 or 2 wherein the adhesive constituting the adhesive layer comprises a silicone-based pressure-sensitive adhesive as the main component.

**21.** The label according to Claim 1 or 2 wherein the adhesive constituting the adhesive layer comprises an epoxy-based adhesive as the main component.

**22.** The label according to Claim 1 or 2 wherein the supporting substrate is a film obtained by an inflation film-formation method.